# EUROPÄISCHE PATENTSCHRIFT

(11) **EP 1 285 541 B1**
(45) Veröffentlichungstag und Bekanntmachung des Hinweises auf die Patenterteilung: **24.10.2007**
(21) Anmeldenummer: 01933621.3
(22) Anmeldetag: 10.05.2001
(51) Int. Cl.: H04Q 3/00, H04M 7/00

(54) **ÜBERMITTLUNG VON DIENSTESTEUERINFORMATIONEN ÜBER WENIGSTENS EINE ZWISCHENSTATION**
TRANSMISSION OF SERVICE CONTROL INFORMATION VIA AT LEAST ONE INTERMEDIATE STATION
TRANSMISSION DE DONNEES DE COMMANDE DE SERVICE PAR AU MOINS UNE STATION INTERMEDIAIRE

(30) Priorität: 29.05.2000 DE 10026653
(43) Veröffentlichungstag der Anmeldung: 26.02.2003
(73) Patentinhaber: NOKIA SIEMENS NETWORKS GMBH & CO. KG, 81541 München (DE)
(72) Erfinder: SCHMIDT, Helmut, 81371 München (DE)
(86) Internationale Anmeldenummer: PCT/DE2001/001534
(87) Internationale Veröffentlichungsnummer: WO 2001/093601

(56) Entgegenhaltungen:
- EP-A- 1 003 343
- KORPI M ET AL: "SUPPLEMENTARY SERVICES IN THE H.323 IP TELEPHONY NETWORK" IEEE COMMUNICATIONS MAGAZINE, Bd. 37, Nr. 7, Juli 1999 (1999-07), Seiten 118-125, XP000835313 PISCATAWAY, N.J, US ISSN: 0163-6804
- QI GUAN: "Voice Services for PSTN and IP Networks" INTERNATIONAL CONFERENCE ON INTELLIGENCE IN NETWORKS, 22. November 1999 (1999-11-22), Seiten 95-106, XP002901705

## Beschreibung

Die vorliegende Erfindung bezieht sich auf ein Verfahren sowie ein System zur Übermittlung von Dienstesteuerinformationen über eine mindestens eine Zwischenstation beinhaltende Signalisierungsstrecke.

Im Stand der Technik (siehe Figur 4 und Dokument EP-A-1 003 343) ist es möglich, mit einem analogen Telephon 1 oder einem ISDN-Telephon 2 über das Internet mit einer anderen Datenendstation 8 (H.323 Terminal) zu kommunizieren. Zu diesem Zweck ist eine amtseitige Vermittlungsstelle 3 (z.B. EWSD) des öffentlichen Telephonnetzes 4 über ein H.323 Gateway 5 an ein lokales Netz 7 (Ethernet) angeschlossen.

H.323 ist dabei ein internationaler Standard für die Sprach-, Daten- und Videokommunikation über paketorientierte Netze. Er legt die spezifischen Fähigkeiten von Endgeräten im IP(Internet Protokoll)-Umfeld fest.

Unter einem Gateway 5 versteht man die Hard- und Software die man benötigt, um verschiedene Netze (hier das öffentliche Telephonnetz 4 und das Ethernet 7 bzw. das verbindungsorientierte ISDN-Netz und das z.B. paketorientierte Ethernet) miteinander zu verbinden. Ein Gateway 5 hat die Aufgabe, Nachrichten von einem Rechnernetz in ein anderes Rechnernetz zu übermitteln, wofür vor allem die Übersetzung der Kommunikationsprotokolle notwendig ist. Es kann als eine Art Protokollkonverter betrachtet werden, der die Protokolle auf beiden Seiten versteht und in beiden Netzen einen adressierbaren Netzknoten darstellt.

Das lokale Netz 7 (Ethernet) ist mittels eines Routers 10 mit dem H.323 Terminal 8 über das Internet 9 verbunden. Router 10 verbinden Subnetze auf der Vermittlungsschicht des OSI-Referenzmodells.

Das zentrale Steuerelement für das Routen der Rufsignalisierung, aber auch für die Auflösung der Telephonnummern sowie der IP-Adresse, beziehungsweise deren Umwandlung, ist der ebenfalls an das lokale Netz 7 (Ethernet) angeschlossene H.323 Teilnehmervermittlungsanlage 6 (Gatekeeper). Der Gatekeeper 6 ist für die Zugangsberechtigung und die Sicherheit verantwortlich. Darüber hinaus erfaßt der Gatekeeper 6 die Gebühren und weist diese den Partnern in den Netzen zu.

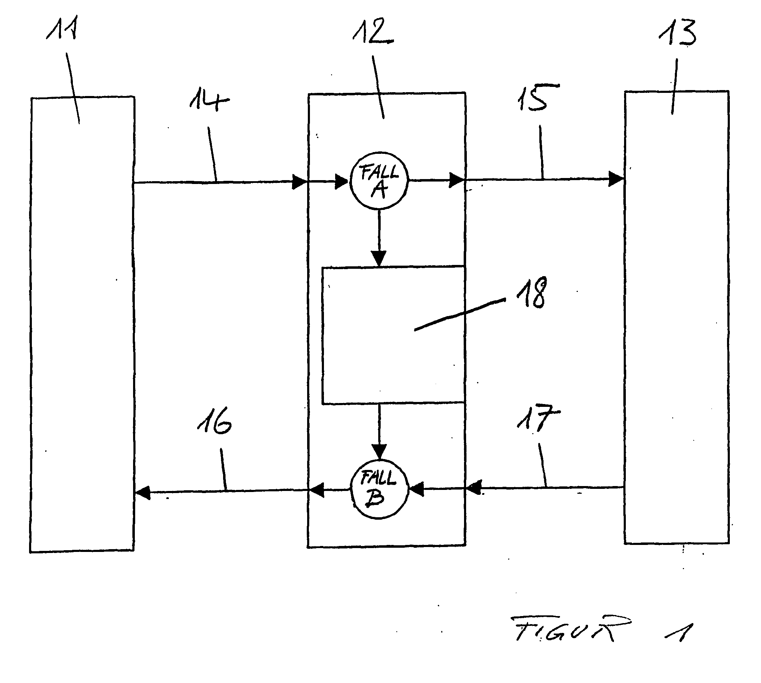

In jedem Fall ist durch obige Anordnung (Figur 1) das Telephonieren mittels einem H.323 Terminal 8, das heißt mittels einer ISDN-Datenendstation zur Datenein- und Datenausgabe, die in der Regel aus einer Tastatur, einem Bildschirm sowie einem Prozessor besteht, über das lokale Netz 7 sowie über das Internet 9 möglich.

Es besteht allerdings bei der Verknüpfung verschiedener Netzwerke durch ein entsprechendes Gateway ein großer Nachteil darin, daß bei der Anwendung auf die Telephonie über Internet eine Menge aus der ISDN-Technik vertrauter Zusatzdienste (Supplementary Services), wie zum Beispiel Rufumleitung, Gebührenanzeige, Anklopfen etc. nicht möglich sind.

Das liegt daran, daß das für die Steuerung von ISDN-Endgeräten entwickelte DSS1-Protokoll nur lokale Signifikanz aufweist, d.h. es ist nur für die Kommunikation zwischen zwei benachbarte Stationen ausgelegt. Die Vermittlungsstelle (z.B. EWSD) 3 im öffentlichen Telephonnetz 4 als erster Endpunkt kann daher nach dem Stand der Technik keine Steuerinformationen für Zusatzdienste über das Gateway 5 als Zwischenstation an ein Datenendgerät 8 als zweiten Endpunkt übermitteln.

Eine Möglichkeit, dieses Problem zu umgehen ist die Verwendung eines vom DSS1 abgeleiteten Protokolls QSIG, welches durch Einführung eines speziellen Informationselementes (das sogenannte NFE "Network Facility Extension") mehrere Stationen überspannen kann. Allerdings ist damit eine Änderung der amtseitigen Vermittlungsstelle und damit ein erheblicher Kostenaufwand verbunden.

Aufgabe der vorliegenden Erfindung ist es daher, auch beim Telephonieren über das Internet mit einer entsprechenden Datenendeinrichtung (z.B. PC), sämtliche Zusatzdienste, wie sie einer gewöhnlichen Telephonverbindung entsprechen, kostengünstig zur Verfügung zustellen.

Diese Aufgabe wird gemäß der vorliegenden Erfindung dadurch gelöst, daß die Zwischenstation (z.B. Gateway) einen Diensteverteiler aufweist, der als Einheit zur Unterscheidung lokal auszuführender und längs der Signalisierungsstrecke weiterzuleitender Dienstesteuerinformationen dient.

Der Diensteverteiler bedient sich bei der Unterscheidung eines Codes, durch den jeder Dienst einer bestimmten Station zugeordnet ist.

Nach Abarbeiten der Dienstesteuerinformation kann (abhängig vom jeweiligen Dienst) der Quelle der Diensteanforderung eine Quittung zugestellt werden, die eine Information enthält, durch welche die eindeutige Verteilung der Quittung gewährleistet ist.

Die Zwischenstation weist eine Protokolleinheit auf, an die der Diensteverteiler gekoppelt ist und die dem Diensteverteiler alle empfangenen Dienstesteuerinformationen und gegebenenfalls zusätzlich weitere Informationen übergibt.

Erfindungsgemäß wird weiterhin ein Verfahren zur Übermittlung von Diensteinformationen von einem ersten Endpunkt über wenigstens eine Zwischenstation überspannend eine Signalisierungsstrecke zu einem zweiten Endpunkt beansprucht, wobei dieses Verfahren folgende Schritte aufweist:
Absenden der Dienstesteuerinformation von einem Endpunkt zu der wenigstens einen Zwischenstation sowie Unterscheidung von lokal, das heißt in der Zwischenstation auszuführenden, und längs der Signalisierungsstrecke weiterzuleitenden Dienstesteuerinformationen.

Es wird darüber hinaus ein Verfahren bzw. ein System zur Übermittlung von Dienstesteuerinformationen beansprucht, wobei diese Übermittlung von einem ersten Endpunkt einer Signalisierungsstrecke über ein erstes Netzwerk zu einem Gateway und von dem Gateway über ein zweites von dem ersten Netzwerk unterschiedlichen Netzwerk zu dem zweiten Endpunkt der Signalisierungsstrecke erfolgt.

Dabei packt das Gateway die von dem ersten Endpunkt eingehenden Dienstesteuerinformationen in einen Datencontainer, der für eine Übertragung über das zweite Netzwerk angepaßt ist und diese Übertragung durchführt.

Weitere Vorteile, Merkmale und Eigenschaften der vorliegenden Erfindung werden nun anhand von Ausführungsbeispielen bezugnehmend auf die begleitenden Zeichnungen näher erläutert.
Figur 1 zeigt eine erfindungsgemäße Konfiguration in der das DSS1-Protokoll entgegen seinem ursprünglichen Einsatzzweck auf einer mehrere Stationen überspannenden Signalisierungsstrecke eingesetzt wird,
Figur 2 zeigt die Position und die Funktion des Diensteverteilers sowie der Protokolleinheit in einer Zwischenstation,
Figur 3 zeigt eine Beispielkonfiguration,

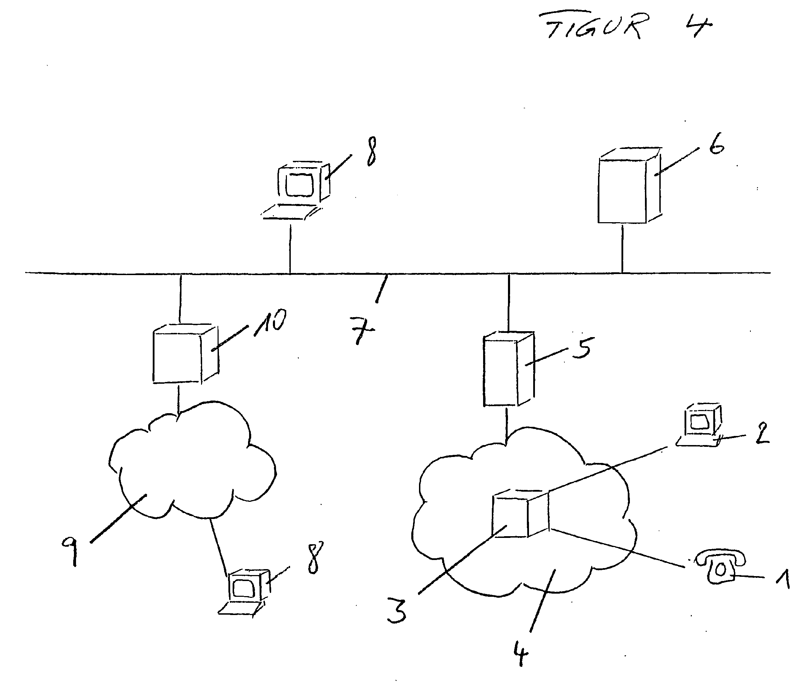

Figur 4 zeigt das H.323-Strukturmodell nach dem Stand der Technik.

Figur 1 zeigt eine erfindungsgemäße Konfiguration, in der das DSS1-Protokoll entgegen seinem ursprünglichen Einsatzzweck auf eine mehrere Stationen überspannenden Signalisierungsstrecke erweitert wird. Zwischen dem ersten Endpunkt 11 und dem zweiten Endpunkt 13 befindet sich mindestens eine Zwischenstation 12 (die nicht unbedingt physikalisch von einem der Endpunkte getrennt sein muß). Der erste Endpunkt 11 kann beispielsweise eine Vermittlungsstelle (EWSD) und der zweite Endpunkt 13 ein anderes Endgerät (PC mit Telephonie-Applikation gemäß Internet-Protokoll) sein.

Nunmehr soll die Erfindung im Detail erläutert werden: Ein mögliches Verfahren zum Steuern von Diensteinformationen ist das im DSS1-Protokoll integrierte sogenannte Generic Functional Protokoll. Die entsprechende Dienstesteuerinformation wird in sogenannten ROSE-Komponenten (Remote Operation Service Element) innerhalb eines speziellen Parameters (des Facility Information Elements) übertragen.

Dabei gibt es vier ROSE-Komponenten: Eine Anforderungs-Komponente (Invoke-Komponente) sowie drei Quittungs-Komponenten (Return Result-, Return Error- und Return Reject-Komponente). Während die Quittungs-Komponenten nur eine Kennung (Invoke ID) enthält, durch die jede Diensteanforderung innerhalb der Signalisierungsverbindung eindeutig gemacht wird, enthält die Anforderungs-Komponente noch zusätzlich einen Operation-Code durch den jeder Zusatzdienst eine eindeutige Zuordnung erhält.

Die in Figur 1 dargestellte Konfiguration soll sich erfindungsgemäß nun so verhalten, daß vom ersten Endpunkt 11 übertragene Dienstesteuerinformationen 14 entweder vom zweiten Endpunkt 13 oder von lokalen Diensteprogrammen 18 der Zwischenstation 12 ausgewertet werden. Im Fall A müssen daher die Dienstesteuerinformationen 14 vom ersten Endpunkt 11 auf die Zwischenstation 12 und mittels einer weitergegebenen DSS1-Nachricht 15 an den zweiten Endpunkt 13 verteilt werden. Im Fall B geht die Dienstesteuerinformation 17 vom zweiten Endpunkt 13 aus und muß in der Zwischenstation 12 mit Dienstesteuerinformationen von lokalen Diensteprogrammen 18 zusammengeführt und als erweiterte DSS1-Nachricht 16 dem ersten Endpunkt 11 zugeführt werden.

Dieses eben beschriebene Szenario setzt voraus, daß die Zwischenstation 12 über eine Möglichkeit verfügt, lokal bzw. entfernt zu verarbeitende Dienstesteuerinformationen aufgrund ihres Inhalts voneinander zu unterscheiden und diese abhängig davon der lokalen Verarbeitungseinheit 18 oder dem jeweiligen Endpunkt 11 bzw. 13 zuzustellen.

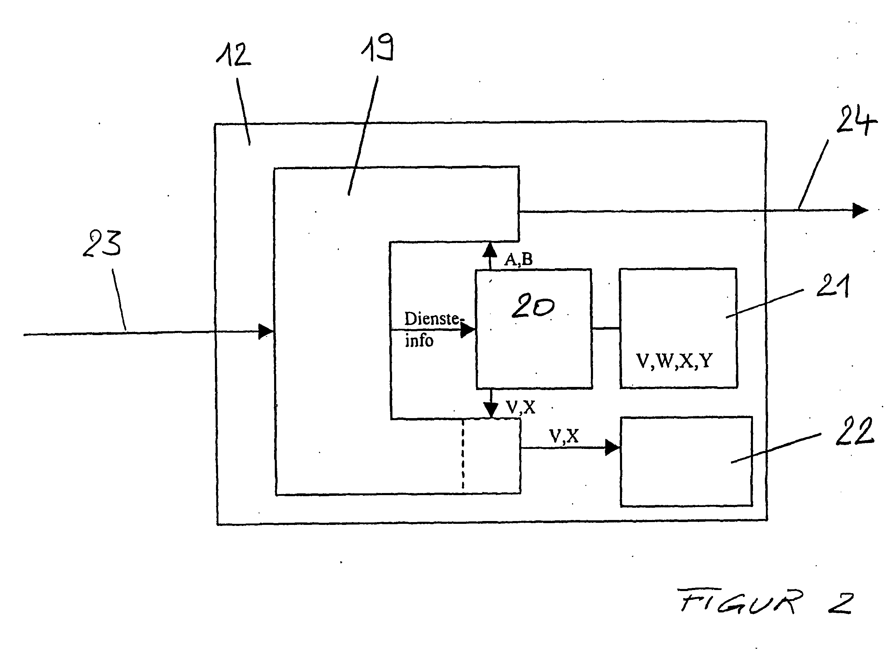

Ein solches Verfahren soll nun anhand Figur 2 beschrieben werden. In die Zwischenstation 12 wird eine Einheit zur Unterscheidung lokal auszuführender und längs der Signalisierungsstrecke 23,24 weiterzuleitender Dienstesteuerungsinformationen integriert. Diese Einheit wird im folgenden als Diensteverteiler 20 bezeichnet.

Die im folgenden verwendete Nomenklatur stammt aus dem ROSE-Protokoll, kann im Prinzip aber auch auf andere Verfahren zur Dienstesteuerung übertragen werden. Genauso können die Dienstesteuerinformationen auch über andere Transportmechanismen als das DSS1 Generic Functional Protocol transportiert werden.

Die Konfiguration der Zwischenstation 12 erfüllt dabei folgende Vorraussetzungen:
Damit der Diensteverteiler 20 eindeutig konfiguriert werden kann, müssen sämtliche längs der Signalisierungsstrecke 23,24 die Dienstesteuerungsinformationen bearbeitende Stationen so konfiguriert werden, daß ein bestimmter Dienst (identifiziert durch seinen Operation-Code) nur von einer bestimmten Station ausgeführt wird.

Um eine eindeutige Verteilung der Quittungen (die wie oben erwähnt nur die Kennung (Invoke-ID) beinhalten) zu gewährleisten, oder anders ausgedrückt, um bei Erhalt einer Quittung dieselbe Quittung einer Diensteanforderung eindeutig zuordnen zu können, werden die die Dienstesteuerinformationen sendenden Endpunkte oder die Zwischenstationen so konfiguriert, daß sie nur Kennungen (Invoke-IDs) innerhalb eines bestimmten Bereichs verwenden. Die Kennung wird von dem vergeben, der die Diensteanforderung verschickt.

Innerhalb jeder Zwischenstation 12 werden die Operation-Codes der lokal, d.h. in der Zwischenstation 12, auszuführenden Dienste und der Bereich der lokal generierten Kennungen gespeichert. Informationen über nichtlokal auszuführende Dienste müssen nicht in der Zwischenstation 12 gespeichert sein.

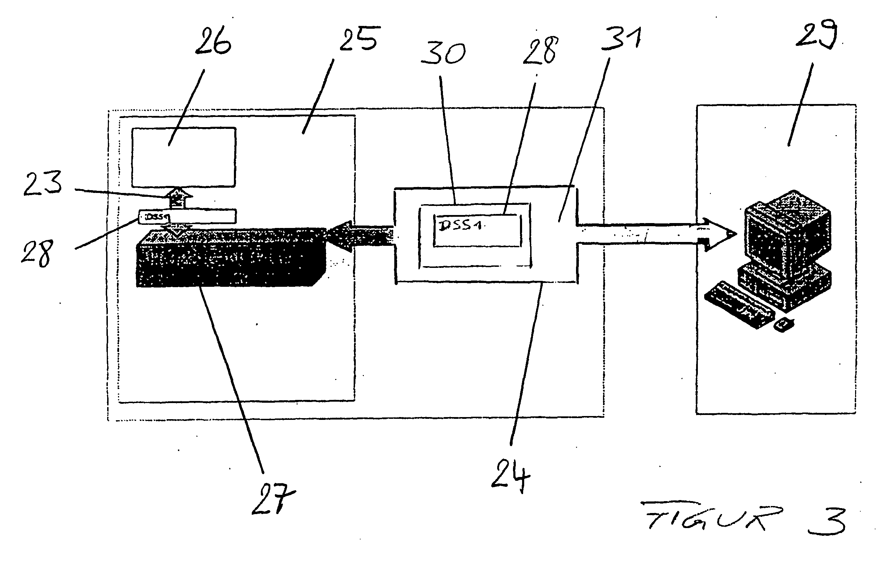

Wie in Figur 3 dargestellt ist der Diensteverteiler 20 an eine Protokollkontrolleinheit 19 der Zwischenstation 12 gekoppelt. Die Protokollkontrolleinheit 19 übergibt dem Diensteverteiler 20 alle empfangenen Dienstesteuerinformationen und gegebenenfalls zusätzlich weitere Informationen, wie die Richtung und den Transportmechanismus in der die Dienstesteuerinformation transportiert wurde. Der Diensteverteiler 20 ermittelt pro Dienstesteuerinformation ob diese längs der Signalisierungsstrecke weitergeleitet werden soll oder ob der Dienst lokal ausgeführt werden soll.

So enthält beispielsweise die Signalisierungsnachricht 23 die Dienstesteuerinformation, daß die Dienste A und B vom zweiten Endpunkt (in Figur 3 nicht dargestellt), die Dienste V und X jedoch lokal ausgeführt werden sollen. Dies erkennt der Diensteverteiler 20 daran, daß der Operation Code von V und X in einer lokalen Diensteliste 21 enthalten ist. Die lokal zu bearbeitenden Dienstesteuerinformationen können entweder vom Diensteverteiler 20 entweder direkt der ausführenden Einheit 22 zugestellt werden, oder (mit einer speziellen Markierung versehen oder in einem speziellen Datenbereich) an die Protokollkontrolleinheit 19 zurückgegeben werden.

Die Dienstesteuerinformationen A und B, die längs der Signalisierungsstrecke weitergeleitet werden müssen, werden an die Protokollkontrolleinheit 19 zurückgegeben und von dieser in einer Signalisierungsnachricht 24 weitergeleitet.

Falls auf Grund von zuvor gestellten Diensteanforderungen der Diensteverteiler 20 Quittungen erhält, ermittelt dieser, ob die in der Quittung enthaltene Kennung lokal vergeben wurde.

Für die Zusammenführung lokal erzeugter mit empfangener Diensteinformation (d.h. Gewährleistung der Funktionalität in umgekehrter Richtung) ist der Diensteverteiler 20 im Normalfall nicht erforderlich. Da in diesem Fall keine Kenntnis über die Dienste notwendig ist, kann dies von der Protokollkontrolleinheit 19 alleine erledigt werden. Allerdings muß gewährleistet sein, daß die Kennungen der Dienstesteuerungsanforderungen in dem zuvor festgelegten Bereich sind, um eine später eindeutige Verteilung daraus resultierender Quittungen zu ermöglichen.

Falls bereits bestehende, nicht konfigurierbare Endgeräte eingesetzt werden, ist es meistens nicht möglich die Bereiche für die Kennung einzuschränken. In diesem Fall muß auch der Diensteverteiler 20 bei der Zusammenführung lokal erzeugter mit empfangener Diensteinformation eingesetzt werden. Dabei müssen die Kennungen aller Diensteanforderungen zusammen mit ihrer Quelle ("lokal" oder "entfernt") abgespeichert werden. Falls dieselbe Kennung bereits existiert, weil sie bereits vorher von anderer Stelle vergeben wurde, muß sie bei der Zusammenführung auf einen noch nicht belegten Wert geändert werden, um die Eindeutigkeit der Kennungen auf der Signalisierungsstrecke 23,24 zu gewährleisten. Wurde die Kennung bei der Zusammenführung geändert, so muß sie bei der Verteilung wieder auf den ursprünglichen Wert zurückgesetzt werden. Aus Gegenrichtung empfangene Quittungen müssen anhand beider Informationen - enthaltene Kennung und Quelle der Diensteanforderung - zugestellt werden.

Generell kann das Verfahren in beiden Richtungen einer Signalisierungsstrecke angewendet werden. Falls die Zusammenführung von Dienstesteuerinformationen jedoch nur in einer Richtung erfolgt (wie beispielsweise in Figur 3) muß die Einteilung der Kennungen in nichtüberlappende Bereiche nur in dieser Richtung, die Verteilung nur in Gegenrichtung erfolgen.

Figur 3 zeigt ein Ausführungsbeispiel der Erfindung. Einem H.323 Client 29 (PC mit IP Telephonie-Applikation) sollen sämtliche DSS1-Zusatzdienste (Supplementary Services) zur Verfügung stehen. Dazu muß das Vermittlungssystem 25 (EWSD) durch eine neue Einheit entsprechend erweitert werden. Die neue Einheit, eine H.323-Gateway-PCU (Peripheral Control U-nit) 27, entspricht im Sinne der Erfindung der Zwischenstation, der EWSD-Kern 26 sowie der H.323-Client 29 sind die Endpunkte. Das verwendete Übertragungsprotokoll ist das DSS1-Protokoll.

Der H.323-Client 29 soll also die DSS1 typische Dienstesteuerinformationen verstehen können. Dazu ist der EWSD-Kern 26 für ein DSS1-Terminal (ISDN-Telephon) konfiguriert. Die H.323-Gateway-PCU 27 packt die vom EWSD-Kern 26 erhaltene DSS1-Nachricht 28 (mit Ausnahme der für die H.323-Gateway-PCU 27 selbst bestimmten Dienstesteuerinformationen) in einen für eine Übertragung über ein H.323-Netzwerk geeigneten Datencontainer 30.

Dieser Datencontainer 30 wird in einer geeigneten H.225-Meldung 31 (H.225 Call Control Message) zum H.323-Client 29 übertragen.

Deutlich zu erkennen ist die Tatsache, daß das eigentlich für lokale Signalisierung entwickelte DSS1-Protokoll in dieser Anordnung über mehrere Stationen transportiert wird (vom EWSD-Kern 26 direkt zur H.323-Gateway-PCU 27 und von dort im Container zum Terminal dem H.323-Client 29).

Eine vom EWSD-Kern 26 zum H.323-Gateway-PCU 27 übertragene DSS1-Nachricht kann aber auch Dienstesteuerinformationen enthalten, die der Steuerung der H.323-Gateway-PCU 27 dienen und damit nicht zum H.323-Client 29 transportiert werden sollen. Um dies zu gewährleisten muß in der H.323-Gateway-PCU 27 ein Diensteverteiler integriert werden. Dieser arbeitet nach dem erfindungsgemäßen Verfahren indem er erkennt, welche Dienstesteuerinformationen für die H.323-Gateway-PCU 27 bestimmt sind und welche innerhalb des Containers zu dem H.323-Client 29 weitergeleitet werden müssen

## Patentansprüche

1. Verfahren zur Übermittlung von Dienstesteuerinformationen von einem ersten Endpunkt (11) über wenigstens eine zwischenstation (12), die ein H.323 gateway hat, überspannend eine Signalisierungsstrecke (23),(24) zu einem zweiten Endpunkt (13),
aufweisend die folgenden Schritte:
- Absenden der Dienstesteuerinformation von einem Endpunkt (11) zu der wenigstens einen Zwischenstation (12),
- Unterscheidung von lokal, das heißt in der Zwischenstation (12) auszuführenden, und längs der Signalisierungsstrecke (23),(24) weiterzuleitenden Dienstesteuerinformation, der ISDN Dienstprogramme steuert, und
- Ausführung der lokalen Dienstesteuerinformationen in der Zwischenstation (12) und Weiterleitung der übrigen Dienstesteuerinformationen an den zweiten Endpunkt (13).

2. Verfahren nach Anspruch 1,
**dadurch gekennzeichnet,**
**daß** der Schritt der Unterscheidung auf der Entschlüsselung eines Codes beruht, durch den jeder Dienst einer bestimmten Station eindeutig zugeordnet ist.

3. Verfahren nach den Ansprüchen 1 oder 2,
**dadurch gekennzeichnet,**
**daß** nach Ausführen der Dienstesteuerinformationen der Quelle der Diensteanforderung eine Quittung zugestellt wird, die eine Identifikation enthält, durch welche die eindeutige Verteilung der Quittung gewährleistet ist.

4. System zur Übermittlung von Dienstesteuerinformationen von einem ersten Endpunkt (11) über wenigstens eine Zwischenstation (12), die ein H.323 gateway hat,
überspannend eine Signalisierungsstrecke (23),(24) zu einem zweiten Endpunkt (13),
**dadurch gekennzeichnet,**
**daß** die Zwischenstation (12) einen Diensteverteiler (20) aufweist, der als Einheit zur Unterscheidung lokal auszuführender und längs der Signalisierungsstrecke (23),(24) weiterzuleitender Dienstesteuerinformationen, der ISDN Dienstprogramme steuert, -konfiguriert ist.

5. System nach Anspruch 4,
**dadurch gekennzeichnet,**
**daß** der Diensteverteiler (20) derart konfiguriert ist, daß er sich bei der Unterscheidung eines Codes bedient, durch den jeder Dienst einer bestimmten Station eindeutig zugeordnet ist.

6. System nach Anspruch 4 oder 5,
**dadurch gekennzeichnet,**
**daß** die Zwischenstation (12) eine Protokollkontrolleinheit (19) aufweist an die der Diensteverteiler (20) gekoppelt ist und die dem Diensteverteiler (20) alle empfangenen Dienstesteuerinformationen und gegebenenfalls zusätzlich weitere Informationen übergibt.

## Claims

1. Method for transmission of service control information from a first end point (11) via at least one intermediate station (12) which has an H.323 gateway, spanning a signalling link (23), (24) to a second end point (13),
featuring the following steps:
Sending out the service control information from an end point (11) to the at least one intermediate station (12),
Discrimination between local service control information, meaning that which is to be executed in the intermediate station (12), and service control information to be forwarded along the signalling link (23),(24) which controls ISDN service programs, and
Executing the local service control information in the intermediate station (12) and forwarding the remaining service control information to the second end point (13).

2. Method in accordance with claim 1,
**characterised in that**
the step for discrimination is based on the decoding of a code through which a specific station is uniquely assigned to each service.

3. Method in accordance with claims 1 or 2,
**characterised in that**
after execution of the service control information an acknowledgement is submitted to the originator of the service request which contains an identification through which the unique distribution of the acknowledgement is guaranteed.

4. System for transmission of service control information from a first end point (11) via at least one intermediate station (12) which has an H.323 gateway,
spanning a signalling link (23), (24) to a second end point (13),
**characterised in that**
the intermediate station (12) features a service distributor (20), which is configured as a unit for discriminating between service control information to be executed locally and service control information to be forwarded along the signalling link (23), (24) which controls ISDN service programs.

5. System in accordance with claim 4,
**characterised in that**
the service distributor (20) is configured so that it utilizes a code during the discrimination through which each service is uniquely assigned to a specific station.

6. System in accordance with claim 4 or 5,
**characterised in that**
the intermediate station (12) features a protocol control unit (19) to which the service distributor is coupled (20) and which transfers to the service distributor (20) all received service control information and where necessary additional further information.

## Revendications

1. Procédé de transmission d'informations de commande de services d'un premier point terminal (11) vers un deuxième point terminal (13) via au moins une station intermédiaire (12) qui a une passerelle H.323, avec couverture d'un trajet de signalisation (23), (24), comportant les étapes suivantes:
- envoi de l'information de commande de services d'un point terminal (11) vers l'au moins une station intermédiaire (12),
- distinction entre information de commande de services à exécuter localement, c'est-à-dire dans la station intermédiaire (12), et à retransmettre le long du trajet de signalisation (23), (24), qui commande des programmes de service ISDN, et
- exécution des informations de commande de services locales dans la station intermédiaire (12) et retransmission des informations de commande de services restantes vers le deuxième point terminal (13).

2. Procédé selon la revendication 1, **caractérisé en ce que** l'étape de la distinction repose sur le décryptage d'un code par lequel chaque service est affecté univoquement à une station déterminée.

3. Procédé selon les revendications 1 ou 2, **caractérisé en ce qu'**est notifiée à la source de la demande des services, après l'exécution des informations de commande de services, une confirmation qui contient une identification par laquelle la distribution univoque de la confirmation est assurée.

4. Système de transmission d'informations de commande de services d'un premier point terminal (11) vers un deuxième point terminal (13) via au moins une station intermédiaire (12) qui a une passerelle H.323, avec couverture d'un trajet de signalisation (23), (24), **caractérisé en ce que** la station intermédiaire (12) comporte un distributeur de services (20) qui est configuré en tant qu'unité permettant de distinguer entre informations de commande de services à exécuter localement et à retransmettre le long du trajet de signalisation (23), (24), qui commande des programmes de service ISDN.

5. Système selon la revendication 4, **caractérisé en ce que** le distributeur de services (20) est configuré de manière telle que, lors de la distinction, il se sert d'un code par lequel chaque service est affecté univoquement à une station déterminée.

6. Système selon la revendication 4 ou 5, **caractérisé en ce que** la station intermédiaire (12) comporte une unité de contrôle de protocole (19) à laquelle le distributeur de services (20) est couplé et qui transfère au distributeur de services (20) toutes les informations de commande de services reçues et, le cas échéant, additionnellement, d'autres informations.
